Europäisches Patentamt

**European Patent Office**

Office européen des brevets

(11) Numéro de publication: **0 120 792**

**A1**

(12)

# DEMANDE DE BREVET EUROPEEN

(21) Numéro de dépôt: **84400611.4**

(22) Date de dépôt: **27.03.84**

(51) Int. Cl.³: **F 02 F 1/24**
F 02 F 7/00, F 01 L 3/22
F 02 B 19/16

(30) Priorité: **29.03.83 FR 8305108**

(43) Date de publication de la demande:
**03.10.84 Bulletin 84/40**

(84) Etats contractants désignés:
**DE GB IT SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Gonnord, Jacques**
**255, route de l'Empereur**
**F-92500 Rueil Malmaison(FR)**

(72) Inventeur: **Guillot, Bernard**
**3, allée des Rives de Bagatelle**
**F-92150 Suresnes(FR)**

(74) Mandataire: **Réal, Jacques et al,**
**Régie Nationale des Usines Renault 8-10, avenue Emile**
**Zola**
**F-92109 Boulogne-Billancourt(FR)**

(54) **Culasse pour moteurs à combustion interne à allumage par compression.**

(57) Culasse (2) pour moteurs à combustion interne à allumage par compression, du type comprenant notamment des chambres de précombustion, des conduits d'admission et d'échappement, et des sièges et guides de soupape respectivement associés aux cylindres du moteur. Suivant l'invention, les chambres de précombustion (4, 40), les conduits d'échappement (10, 100) et les sièges (14, 16) de soupape de cette culasse (2) sont entièrement bruts de coulée et insérés à la coulée dans celle-ci.

Application: notamment à la fabrication des moteurs diesel à préchambres.

FIG.2

0120792

## CULASSE POUR MOTEURS A COMBUSTION INTERNE A ALLUMAGE PAR COMPRESSION

La présente invention se rapporte aux culasses pour moteurs à combustion interne à allumage par compression, du type comprenant notamment des chambres de précombustion, des conduits d'admission et d'échappement, et des sièges et guides de soupape respectivement associés aux cylindres du moteur.

Il est connu dans la fabrication d'une culasse coulée ou non sous pression, d'utiliser des noyaux pour réaliser des conduits d'admission et d'échappement et de rapporter dans cette culasse des sièges de soupape et des chambres de précombustion.

Le brevet FR 2 165 646 décrit un exemple type de ce siège de soupape rapporté, destiné à être fixé dans les culasses de cylindres des moteurs à combustion interne. Ce siège de soupape comporte un filetage autotaraudant.

Les brevets FR 2 393 147 et FR 2 393 148 montrent des moteurs à combustion interne du type diesel à préchambre d'injection et d'inflammation dans lesquels la préchambre est formée dans une pièce montée rapportée dans la culasse.

Il est également connu par le brevet GB 1 075 951 de réaliser des conduits d'admission et d'échappement à l'aide d'inserts métalliques réfractaires dont une des extrémités est conformée de manière à constituer un siège de soupape.

Par ailleurs, le brevet DE 2 602 434 souligne l'intérêt essentiel que présente l'insertion à la coulée d'une culasse de moteur à combustion interne, des conduits d'admission et d'échappement revêtus d'un matériau céramique permettant une bonne isolation thermique.

Dans le brevet FR 2 423 643, on utilise une plaque rapportée, conductrice de la chaleur, qui comporte un espace creux sur l'entre-sièges et des zones élargies bien appliquées sur les zones bien refroidies de la culasse pour protéger l'entre-sièges et évacuer la chaleur.

Les techniques de fabrication actuelles ne permettent pas de fabriquer une culasse particulièrement simple et économique pour un moteur de type diesel à chambres de précombustion, dans la mesure où l'usinage précis de cette culasse se révèle important et coûteux en vue de rapporter notamment les chambres de précombustion ou les sièges de soupape.

L'invention a donc pour but de remédier aux inconvénients précités et de réaliser une économie substantielle au niveau des chaînes de fabrication de culasses.

A cet effet, elle propose une culasse pour moteurs à combustion interne à allumage par compression du type à chambres de précombustion qui, suivant une particularité de l'invention, comporte des chambres de précombustion, des conduits d'échappement et des sièges de soupape entièrement bruts de coulée et insérés à la coulée dans cette culasse.

L'insertion des éléments précités simplifie et rentabilise dans de larges proportions la fabrication de la culasse par la suppression de nombreuses phases d'usinage.

L'insertion des conduits d'échappement permet, de façon connue en soi, d'optimiser le profil de ceux-ci et l'écoulement des gaz.

Par contre, l'insertion des chambres de précombustion apporte de nombreux avantages nouveaux, notamment :

- l'épaisseur de ces chambres de précombustion peut être maintenue sensiblement constante ;

- une meilleure étanchéité peut être assurée au niveau du joint de culasse et de ces chambres de précombustion ;

- il ne s'avère plus nécessaire de concevoir une pièce de révolution, ce qui fournit un degré de liberté supplémentaire dans les zones des chambres de précombustion ;

- les recoins générateurs d'émissions d'hydrocarbures propres aux chambres de précombustion rapportées sont supprimés, ce qui réduit avantageusement la pollution ;

- les matériaux céramiques peuvent être envisagés; travaillant essentiellement à la compression, ils ne sont pas adaptés aux chambres de précombustion usinées et rapportées.

Suivant une autre particularité de l'invention, un ensemble monobloc constitué par un siège de soupape d'admission et un siège de soupape d'échappement, reliés par une partie de raccordement, est associé à chaque paire de conduits d'admission et d'échappement.

Cette disposition permet, outre la réduction de l'usinage et des coûts de fabrication, de consolider et de protéger thermiquement le centre de la chambre de combustion ou pontet inter-soupapes, en particulier pour les moteurs à forte charge thermique.

Suivant une autre particularité de l'invention, les chambres de précombustion, les conduits d'échappement et les sièges de soupape sont réalisés à partir de matériaux céramiques. Ces matériaux présentent des caractéristiques d'isolation thermique et d'anti-usure supérieures à celles des matériaux métalliques réfractaires.

D'autres particularités et avantages de la présente invention apparaîtront plus clairement à la lecture de la description qui suit d'un mode de réalisation donné uniquement à titre d'exemple, et représenté aux dessins annexés dans lesquels :

- la figure 1 représente une vue de dessous d'une culasse pour moteur diesel à chambres de précombustion conforme à l'invention ;

- la figure 2 représente une vue en coupe partielle suivant 2 - 2 de la culasse selon la figure 1, montrant une chambre de précombustion ;

- la figure 3 représente une section suivant 3 - 3 de la culasse selon la figure 1, montrant un ensemble monobloc de sièges d'admission et d'échappement ;

- la figure 4 représente une section suivant 4 - 4 de la culasse selon la figure 1, montrant un pontet inter-soupapes avec une partie de raccordement des sièges d'admission et d'échappement; et

- la figure 5 représente une section suivant 5 - 5 de la culasse selon la figure 1, montrant un conduit d'échappement et des siège et guide de soupape associés.

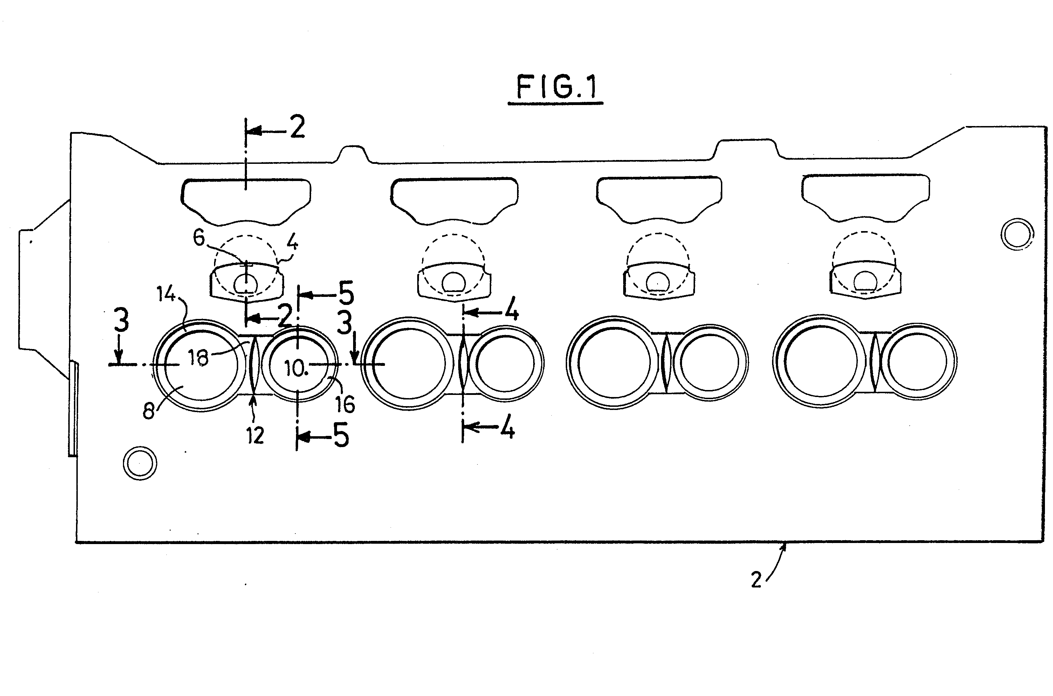

Conformément au mode de réalisation de l'invention, une culasse 2 pour un moteur quatre cylindres à combustion interne à allumage par compression du type à préchambres d'injection et d'auto-inflammation, est représentée à la figure 1 avec ses chambres de précombustion 4 repérées par des axes 6 et ses quatre paires de conduits d'admission 8 et d'échappement 10. Un ensemble monobloc 12 constitué par un siège de soupape d'admission 14 et un siège de soupape d'échappement 16 reliés par une partie de raccordement 18 est associé à chaque paire de conduits d'admission 8 et d'échappement 10.

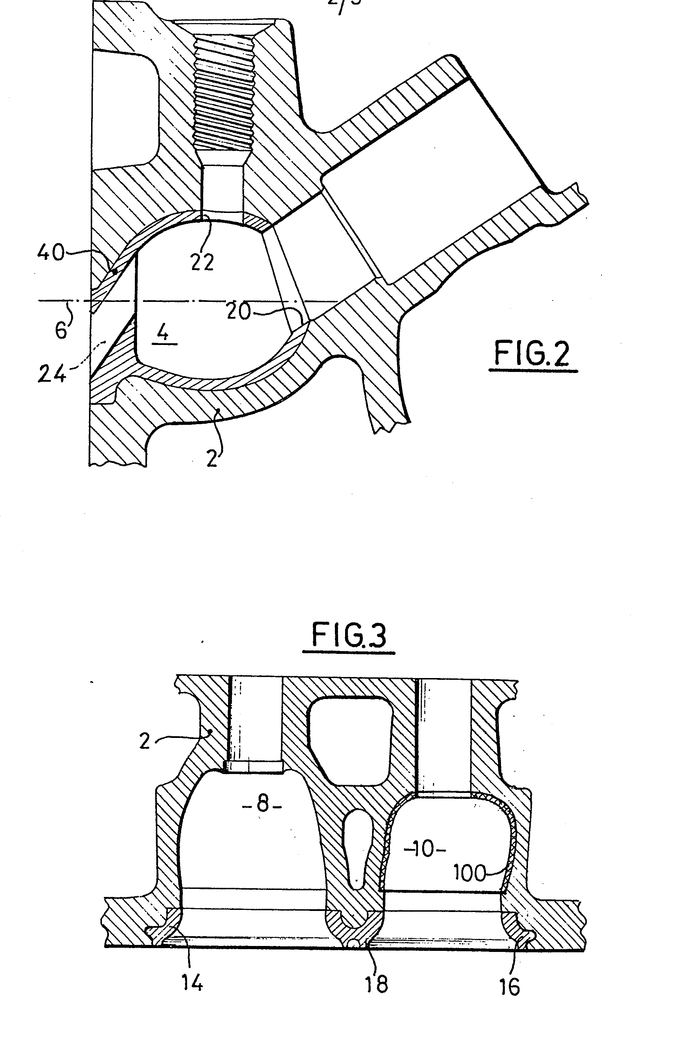

La figure 2 montre que chaque chambre de précombustion 4 de la culasse 2 est formée par un insert 40. Cette chambre de précombustion 4 comporte un premier orifice 20 et un second orifice 22 permettant respectivement l'injection du combustible et le réchauffage de celui-ci.

Elle communique par un canal 24 de section réduite avec une chambre de travail et de combustion proprement dite du moteur non représentée. Le combustible peut y être préalablement chauffé de façon importante pour favoriser son auto-inflammation. Cet échauffement est nettement amélioré par une excellente isolation thermique de la chambre de précombustion 4 délimitée par l'insert 40 éventuellement en matériau céramique et par une étanchéité améliorée au niveau du joint de culasse.

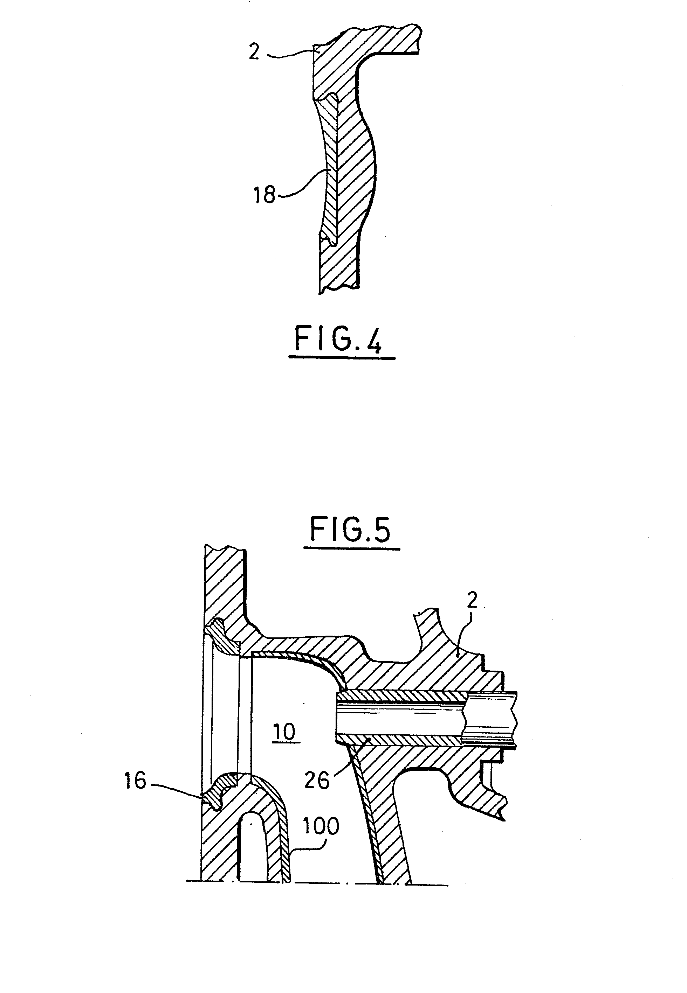

La figure 3 montre une section longitudinale de l'ensemble monobloc 12 qui réunit le siège de soupape d'admission 14 au siège de soupape d'échappement 16 par un entre-sièges 18 dont la section transversale est illustrée à la figure 4. L'insertion de cet ensemble 12 supprime avantageusement les usinages de la culasse nécessaires à l'emmanchement ou au vissage de sièges de soupape habituellement séparés.

L'entre-sièges 18 soumis habituellement à de fortes sollicitations thermiques est ainsi convenablement protégé des hautes températures et il ne s'y forme plus de fissures.

Aux figures 3 et 5 est représenté un insert 100 en matériau céramique qui délimite le conduit d'échappement 10 et est noyé dans la culasse 2. Cet insert d'échappement 100 peut facilement présenter un profil et des sections déterminés pour optimiser l'écoulement des gaz dans le conduit d'échappement 10.

Il n'a pas été jugé utile d'insérer à la coulée de conduit d'admission 8. Les guides de soupape 26 peuvent être éventuellement insérés à la coulée en venant ou non de matière avec les inserts d'échappement 100.

0120792

REVENDICATIONS

1. Culasse pour moteurs à combustion interne à allumage par compression, du type comprenant notamment des chambres de précombustion, des conduits d'admission et d'échappement, et des sièges et guides de soupape respectivement associés aux cylindres du moteur, caractérisée par des chambres de précombustion (4, 40), des conduits d'échappement (10, 100), et des sièges (14, 16) de soupape entièrement bruts de coulées et insérés à la coulée dans ladite culasse (2).

2. Culasse selon la revendication 1, caractérisée en ce qu'un ensemble monobloc (12), constitué par un siège de soupape d'admission (14) et un siège de soupape d'échappement (16) reliés par un entre-sièges (18), est associé à chaque paire de conduits d'admission (8) et d'échappement (10).

3. Culasse selon l'une quelconque des revendications 1 et 2, caractérisée en ce que les chambres de précombustion (40), les conduits d'échappement (100) et les sièges de soupape (14, 16, 18) sont réalisés à partir de matériaux céramiques.

FIG.1

40

22

6

20

24

4

2

FIG.2

FIG.3

2

−8−

−10−

100

14

18

16

FIG.4

FIG.5

**0120792**
Numéro de la demande

Office européen
des brevets

**RAPPORT DE RECHERCHE EUROPEENNE**

EP ·84 4ɔ 0611

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl. ³) |
|---|---|---|---|
| A | GB-A- 685 809 (PORSCHE)<br>* Page 2, lignes 1-52 *<br>--- | 1 | F 02 F 1/24<br>F 02 F 7/00<br>F 01 L 3/22<br>F 02 B 19/16 |
| A | FR-A-1 239 335 (HISPANO SUISA)<br>* Page 2 *<br>--- | 1,2 | |
| A | DE-A-2 433 698 (TOYOTA)<br>* Page 15, alinéa 2 *<br>--- | 1,3 | |
| D,A | GB-A-1 075 951 (GODDIN)<br>* Page 1, lignes 52-79 *<br>--- | 1 | |
| A | EP-A-0 067 327 (TOKYO SHIBAURA)<br>* Page 13, lignes 1-38 *<br>----- | 3 | |

**DOMAINES TECHNIQUES RECHERCHES (Int. Cl. ³)**

F 02 F
F 02 B
F 01 L
B 22 D

Le présent rapport de recherche a été établi pour toutes les revendications

| Lieu de la recherche | Date d'achèvement de la recherche | Examinateur |
|---|---|---|
| LA HAYE | 20-06-1984 | WASSENAAR G. |